# EUROPÄISCHE PATENTSCHRIFT

(11) **EP 3 766 845 B1**
(45) Veröffentlichungstag und Bekanntmachung des Hinweises auf die Patenterteilung: **04.12.2024**
(21) Anmeldenummer: 19186753.0
(22) Anmeldetag: 17.07.2019
(51) Int. Cl.: C03B 37/012, C03B 37/027

(54) **VERFAHREN ZUR HERSTELLUNG EINER HOHLKERNFASER UND ZUR HERSTELLUNG EINER VORFORM FÜR EINE HOHLKERNFASER**
METHOD FOR PRODUCING A HOLLOW CORE FIBRE AND FOR PRODUCING A PREFORM FOR A HOLLOW CORE FIBRE
PROCÉDÉ DE FABRICATION D'UNE FIBRE À COEUR CREUX ET DE FABRICATION D'UNE PRÉFORME POUR UNE FIBRE À COEUR CREUX

(43) Veröffentlichungstag der Anmeldung: 20.01.2021
(73) Patentinhaber: Heraeus Quarzglas GmbH & Co. KG, 63450 Hanau (DE)
(72) Erfinder: ROSENBERGER, Manuel, 63450 Hanau (DE); HÜNERMANN, Michael, 63450 Hanau (DE); TROMMER, Martin, 63450 Hanau (DE); SCHUSTER, Kay, 63450 Hanau (DE); WEIMANN, Steffen, 63450 Hanau (DE)
(74) Vertreter: Staudt, Armin Walter

(56) Entgegenhaltungen:
- US-A1- 2005 226 578
- GREGORY T. JASION ET AL: "Fabrication of tubular anti-resonant hollow core fibers: modelling, draw dynamics and process optimization", OPTICS EXPRESS, vol. 27, no. 15, 10 July 2019 (2019-07-10), pages 20567, XP055655469, DOI: 10.1364/OE.27.020567
- NAWAZUDDIN M B S ET AL: "Lotus Shaped Negative Curvature Hollow Core Fibre with 10.5 dB/km at 1550 nm Wavelength", 2017 EUROPEAN CONFERENCE ON OPTICAL COMMUNICATION (ECOC), IEEE, 17 September 2017 (2017-09-17), pages 1 - 3, XP033336474, DOI: 10.1109/ECOC.2017.8346101
- "University of Bath PhD.", 31 December 2013, article FEI YU: "Hollow core negative curvature fibres", pages: 59 - 74, XP055656461
- A F KOSOLAPOV ET AL: "Hollow-core revolver fibre with a double-capillary reflective cladding", QUANTUM ELECTRONICS., vol. 46, no. 3, 29 March 2016 (2016-03-29), GB, pages 267 - 270, XP055502520, ISSN: 1063-7818, DOI: 10.1070/QEL15972
- BEN SHERLOCK ET AL: "Tunable fibre-coupled multiphoton microscopy with a negative curvature fibre", JOURNAL OF BIOPHOTONICS, vol. 9, no. 7, 15 March 2016 (2016-03-15), DE, pages 715 - 720, XP055299632, ISSN: 1864-063X, DOI: 10.1002/jbio.201500290

## Beschreibung

### Technischer Hintergrund

Die Erfindung betrifft ein Verfahren zur Herstellung einer Antiresonanten Hohlkernfaser, die einen sich entlang einer Faser-Längsachse erstreckenden Hohlkern und einen den Hohlkern umgebenden Mantelbereich, der eine Anzahl von Antiresonanzelementen umfasst, mit den Verfahrensschritten:
(a) Bereitstellen eines Hüllrohres, das eine Hüllrohr-Innenbohrung und eine Hüllrohr-Längsachse aufweist, entlang der sich eine von einer Innenseite und einer Außenseite begrenzte Hüllrohr-Wandung erstreckt,
(b) Bereitstellen einer Anzahl von rohrförmigen Antiresonanzelement-Vorformlingen,
(c) Anordnen der Antiresonanzelement-Vorformlinge an Soll-Positionen der Innenseite der Hüllrohr-Wandung unter Bildung einer primären Vorform, die einen hohlen Kernbereich und einen inneren Mantelbereich aufweist,
(d) Weiterverarbeitung der primären Vorform zu einer sekundären Vorform, aus der die Hohlkernfaser gezogen wird, wobei die Weiterverarbeitung ein Elongieren und optional eine einmalige oder wiederholte Durchführung von einem oder mehreren der folgenden Heißformprozesse umfasst:
   (i) Kollabieren,
   (ii) Kollabieren und gleichzeitiges Elongieren,
   (iii) Aufkollabieren von zusätzlichem Mantelmaterial,
   (iv) Aufkollabieren von zusätzlichem Mantelmaterial und anschließendes Elongieren,
   (v) Aufkollabieren von zusätzlichem Mantelmaterial und gleichzeitiges Elongieren, und
(e) Ziehen der sekundären Vorform zu der Hohlkernfaser,
wobei nach dem Elongieren gemäß Verfahrensschritt (d) mindestens ein Teil der vormaligen rohrförmigen Antiresonanzelement-Vorformlinge der primären Vorform eine ovale Außenquerschnittsform aufweist, mit einer längsten Querschnittsachse A_{L} und einer kürzesten Querschnittsachse A_{K}, wobei das Achsenlängenverhältnis A_{L}/A_{K} im Bereich zwischen 1,01 und 1,27 liegt, und wobei die kürzeste Querschnittsachse A_{K} von der Hüllrohr-Längsachse aus gesehen in radialer Richtung verläuft.

Außerdem betrifft die Erfindung ein Verfahren zur Herstellung einer Vorform für eine Antiresonante Hohlkernfaser, die einen sich entlang einer Faser-Längsachse erstreckenden Hohlkern und den Hohlkern umgebenden Mantelbereich aufweist, der mehrere Antiresonanzelemente umfasst, mit den Verfahrensschritten:
(a) Bereitstellen eines Hüllrohres, das eine Hüllrohr-Innenbohrung und eine Hüllrohr-Längsachse aufweist, entlang der sich eine von einer Innenseite und einer Außenseite begrenzte Hüllrohr-Wandung erstreckt,
(b) Bereitstellen einer Anzahl von rohrförmigen Antiresonanzelement-Vorformlingen,
(c) Anordnen der Antiresonanzelement-Vorformlinge an Soll-Positionen der Innenseite der Hüllrohr-Wandung unter Bildung einer primären Vorform, die einen hohlen Kernbereich und einen inneren Mantelbereich aufweist, und
(d) Weiterverarbeitung der primären Vorform zu einer sekundären Vorform für die Hohlkernfaser, wobei die Weiterverarbeitung ein Elongieren und optional eine einmalige oder wiederholte Durchführung von einem oder mehreren der folgenden Heißformprozesse umfasst:
   (i) Kollabieren,
   (ii) Kollabieren und gleichzeitiges Elongieren,
   (iii) Aufkollabieren von zusätzlichem Mantelmaterial,
   (iv) Aufkollabieren von zusätzlichem Mantelmaterial und anschließendes Elongieren,
   (v) Aufkollabieren von zusätzlichem Mantelmaterial und gleichzeitiges Elongieren,
wobei nach dem Elongieren gemäß Verfahrensschritt (d) mindestens ein Teil der vormaligen rohrförmigen Antiresonanzelement-Vorformlinge der primären Vorform eine ovale Außenquerschnittsform aufweist, mit einer längsten Querschnittsachse A_{L} und einer kürzesten Querschnittsachse A_{K}, wobei das Achsenlängenverhältnis A_{L}/A_{K} im Bereich zwischen 1,01 und 1,27 liegt, und wobei die kürzeste Querschnittsachse A_{K} von der Hüllrohr-Längsachse aus gesehen in radialer Richtung verläuft.

Herkömmliche Monomode-Lichtleitfasern aus Vollmaterial haben einen Kernbereich aus Glas, der von einem Mantelbereich aus Glas mit niedrigerem Brechungsindex umgeben ist. Die Lichtleitung beruht dabei auf Totalreflexion zwischen Kern- und Mantelbereich. Die Wechselwirkungen des geführten Lichtes mit dem Vollmaterial sind jedoch mit einer erhöhten Latenz bei der Datenübertragung und relativ niedrigen Schädigungsschwellen gegenüber energiereicher Strahlung verbunden.

Diese Nachteile vermeiden oder verringern "Hohlkernfasern", bei denen der Kern einen evakuierten, mit Gas oder Flüssigkeit gefüllten Hohlraum umfasst. In Hohlkernfasern ist die Wechselwirkung des Lichtes mit dem Glas geringer als in Vollkernfasern. Der Brechungsindex des Kerns ist kleiner als der des Mantels, so dass eine Lichtleitung durch Totalreflexion nicht möglich ist und das Licht normalerweise aus dem Kern in den Mantel entweichen würde. In Abhängigkeit vom physikalischen Mechanismus der Lichtleitung werden Hohlkernfasern unterteilt in "photonische Bandlückenfasern" und "Antiresonanz-Reflexionsfaser".

Bei "photonischen Bandlückenfasern" ist der hohle Kernbereich von einem Mantel umgeben, in dem kleine Hohlkanäle periodisch angeordnet sind. Die periodische Struktur der Hohlkanäle im Mantel bewirkt den in Anlehnung an die Halbleitertechnologie als "photonische Bandlücke" bezeichneten Effekt, wonach an den Mantelstrukturen gestreutes Licht bestimmter Wellenlängenbereiche aufgrund von Braggreflexion im zentralen Hohlraum konstruktiv interferiert und sich nicht transversal im Mantel ausbreiten kann.

Bei der als "Antiresonante Hohlkernfaser" ("antiresonant hollow-core fibers"; AR-HCF) bezeichneten Ausführungsform der Hohlkernfaser ist der hohle Kernbereich von einem inneren Mantelbereich umgeben, in dem sogenannte "antiresonante Elemente" (oder "Antiresonanzelemente"; kurz: "AREs") angeordnet sind. Die um den Hohlkern gleichmäßig verteilten Wandungen der Antiresonanzelemente können als in Antiresonanz betriebene Fabry-Perot-Kavitäten wirken, die das auftreffende Licht reflektieren und durch den Faserkern leiten.

Diese Fasertechnologie verspricht eine niedrige optische Dämpfung, ein sehr breites Transmissionsspektrum (auch im UV- oder IR-Wellenlängenbereich) und eine geringe Latenz bei der Datenübertragung.

Potentielle Anwendungen der Hohlkernfasern liegen auf dem Gebiet der Datenübertragung, der Hochleistungsstrahlführung, beispielsweise zur Materialbearbeitung, der Modalfilterung, der nichtlinearen Optik, insbesondere zur Superkontinuumserzeugung, vom ultravioletten bis infraroten Wellenlängenbereich.

### Stand der Technik

Ein Nachteil Antiresonanter Hohlkernfasern liegt darin, dass Moden höherer Ordnung nicht zwangsläufig unterdrückt werden, so dass sie über große Übertragungslängen häufig nicht rein einmodig sind und sich die Qualität des Ausgangsstrahls verschlechtert.

Im Paper von Francesco Poletti "Nested antiresonant nodeless hollow core fiber"; Optics Express, Vol. 22, No. 20 (2014); DOI: 10.1364/OE 22.023807, wird ein Faserdesign vorgeschlagen, bei dem Antiresonanzelemente nicht als einfaches singuläres Strukturelement ausgebildet sind, sondern sich aus mehreren, miteinander verschachtelten (englisch: nested) Strukturelementen zusammensetzen. Die verschachtelten Antiresonanzelemente sind so ausgelegt, dass Kernmoden höherer Ordnung phasenangepasst an die Mantelmoden sind und unterdrückt werden, aber nicht die fundamentale Kernmode. Dadurch ist die Ausbreitung der fundamentalen Kernmode stets gewährleistet und die Hohlkernfaser kann über einen begrenzten Wellenlängenbereich effektiv einmodig gemacht werden.

Die effektive Modenunterdrückung hängt von der Mittenwellenlänge des übertragenen Lichts und von Strukturparametern des Faserdesigns ab, wie dem Radius des Hohlkerns und der Durchmesserdifferenz von verschachtelten Ringstrukturen in den Antiresonanzelementen.

Aus der EP 3 136 143 A1 ist eine Antiresonante Hohlkernfaser bekannt (dort bezeichnet als "Hohlkernfaser ohne Bandlücke"), bei der der Kern neben der Fundamentalmode noch weitere Moden leiten kann. Zu diesem Zweck ist er von einem inneren Mantel mit "nicht-resonanten Elementen" umgeben, die eine Phasenanpassung von antiresonanten Moden mit den höheren Moden liefern. Die Herstellung der Hohlkernfaser erfolgt nach einer sogenannten "stack-and-draw-Technik", indem die Ausgangselemente zu einem achsenparallelen Ensemble angeordnet und zu einer Vorform fixiert werden und die Vorform anschließend elongiert wird. Hierbei wird ein Hüllrohr mit hexagonalem Innenquerschnitt verwendet und in den Innenkanten des Hüllrohres werden sechs sogenannte "ARE-Vorformen" (Anti-Resonanz-Element-Vorformen) fixiert. Diese Vorform wird in zwei Stufen zu einer Hohlkernfaser ausgezogen.

Aus der WO 2018/169487 A1 ist ein Verfahren zur Herstellung einer Vorform für antiresonante Hohlkernfasern bekannt, bei dem ein erster Mantelbereich eine Vielzahl an Stäben und ein zweiter Mantelbereich eine Vielzahl von Rohren umfasst, die von einem Hüllrohr umgeben sind. Stäbe, Rohre und Hüllrohr werden mittels "Stack and draw"-Technik zur Bildung einer Vorform zusammengefügt. Vor dem Elongieren der Vorform wird das Vorformende versiegelt, was durch Aufbringen einer Siegelmasse geschieht. Als Siegelmasse wird beispielsweise ein UV-Kleber eingesetzt.

Gregory T. Jasion et al.: "Fabrication of tubular anti-resonant hollow core fibers: modelling, draw dynamics and process optimization", OPTICS EXPRESS, Bd. 27, Nr. 15, (2019-07-10), Seiten 20567-20582, DOI: 10.1364/OE.27.020567, offenbart ein Verfahren zur Herstellung einer Antiresonanten Hohlkernfaser, die einen sich entlang einer Faser-Längsachse erstreckenden Hohlkern und einen den Hohlkern umgebenden inneren Mantelbereich aufweist, der mehrere Antiresonanzelemente enthält. Das Verfahren umfasst die Verfahrensschritte: Bereitstellen eines Hüllrohres mit einem Außendurchmesser im Bereich von 20 bis 30 mm; Anordnen einer Anzahl von rohrförmigen Antiresonanzelement-Vorformlingen an Soll-Positionen der Innenseite der Hüllrohr-Wandung unter Bildung einer primären Vorform, und Weiterverarbeitung der primären Vorform. Die Weiterverarbeitung umfasst ein Elongieren zu einer sekundären Vorform (Cane) mit einem Außendurchmesser von circa 3 mm, aus der die Hohlkernfaser gezogen wird. In der sekundären Vorform weisen die Antiresonanzelement-Vorformlinge eine ovale Außenquerschnittsform auf, wobei die kürzeste Querschnittsachse in radialer Richtung verläuft. Die sekundäre Vorform (Cane) wird beim Faserziehprozess von einem äußeren Mantelrohr mit einem Außendurchmesser im Bereich von 10 bis 30 mm überfangen.

Nawazuddin et al.: "Lotus Shaped Negative Curvature Hollow Core Fibre with 10.5 dB/km at 1550 nm Wavelength", 2017 EUROPEAN CONFERENCE ON OPTICAL COMMUNICATION (ECOC), IEEE, 17. September 2017, Seiten 1-3, DOI: 10.1109/ECOC.2017.8346101; offenbart ebenfalls ein Verfahren zur Herstellung einer Antiresonanten Hohlkernfaser, die einen sich entlang einer Faser-Längsachse erstreckenden Hohlkern und einen den Hohlkern umgebenden inneren Mantelbereich aufweist, der mehrere Antiresonanzelemente enthält. Es wird eine primäre Vorform hergestellt, mit einem Hüllrohr, an dessen Innenseite sechs große ARE-Außenrohre und sechs kleine Kapillare als Abstandselemente angeordnet sind. Aus der primären Vorform wird eine sekundäre Vorform gezogen (Cane), wonach die . ARE-Außenrohre und die Kapillaren einen ovalen Querschnitt haben.

Fei Yu: "Hollow core negative curvature fibres'; in: "University of Bath PhD.", (2013-12-31), Seiten 59-74, offenbart ein Verfahren zur Herstellung einer Antiresonanten Hohlkernfaser, die einen sich entlang einer Faser-Längsachse erstreckenden Hohlkern und einen den Hohlkern umgebenden inneren Mantelbereich aufweist, der mehrere Antiresonanzelemente enthält. Die Herstellung der Hohlkernfaser umfasst die Verfahrensschritte: Bereitstellen eines Hüllrohres; Anordnen einer Anzahl von rohrförmigen Antiresonanzelement-Vorformlingen an Soll-Positionen der Innenseite der Hüllrohr-Wandung unter Bildung einer primären Vorform, und Weiterverarbeitung der primären Vorform, umfassend ein Elongieren zu einer sekundären Vorform (Cane), aus der die Hohlkernfaser gezogen wird. In der sekundären Vorform weisen die Antiresonanzelement-Vorformlinge einen nicht runden Querschnitt auf. Beim anschließenden Ziehen der Hohlkernfaser werden verschiedene Bereiche der sekundären Vorform mit unterschiedlichen Drücken beaufschlagt.

### Technische Aufgabenstellung

Antiresonante Hohlkernfasern und insbesondere solche mit verschachtelten Strukturelementen haben komplexe Innengeometrien, was ihre exakte und reproduzierbare Herstellung erschwert. Dies gilt umso mehr, da zur Einhaltung der Resonanzbeziehungsweise Antiresonanzbedingungen bereits geringe Maßabweichungen in der Größenordnung der Arbeitswellenlänge des zu führenden Lichts nicht tolerierbar sind. Abweichungen von der Soll-Geometrie können ihre Ursache bei der Konfiguration der Faser-Vorform haben, und sie können auch durch ungewollte nichtmaßstäbliche Verformungen beim Faserziehprozess auftreten.

Bei der bekannten "Stack-and-Draw"-Technik sind viele Elemente positionsgenau zusammenzufügen. Beispielsweise müssen zur Herstellung der aus dem eingangs genannten Paper bekannten Hohlkernfaser im "NANF"-Design sechs Antiresonanzelement-Vorformlinge, jeweils bestehend aus einem Antiresonanzelement-Außenrohr (kurz: ARE-Außenrohr) und einseitig an der Innenmantelfläche des ARE-Außenrohres eingeschweißtem Antiresonanzelement-Innenrohr (kurz: ARE-Innenrohr), an der Innenseite eines Hüllrohres angebracht werden.

Zur Realisierung geringer Dämpfungswerte und breiter Transmissionsbereiche ist neben einer gleichmäßigen Wandstärke der Wandungen der Antiresonanzelemente auch die azimutale Position der Antiresonanzelemente innerhalb des Hüllrohres wichtig. Dies ist mit der "Stack-and-Draw"-Technik nicht ohne Weiteres zu realisieren. Ziel der Erfindung ist, ein Verfahren zur kostengünstigen Herstellung einer Antiresonanten Hohlkernfaser anzugeben, das Beschränkungen herkömmlicher Herstellungsverfahren vermeidet.

Insbesondere ist es Ziel der Erfindung, ein Verfahren zur Herstellung einer Antiresonanten Hohlkernfaser und einer Vorform für Antiresonante Hohlkernfasern bereitzustellen, mit dem reproduzierbar eine hohe Präzision der Strukturelemente und eine exakte Positionierung der Antiresonanzelemente in der Faser in einer ausreichend stabilen und reproduzierbaren Weise erreicht werden kann.

Außerdem sollen Nachteile der klassischen "Stack and Draw"-Technik, mit der die erforderlichen Strukturgenauigkeiten, insbesondere eine gleichmäßige Wandstärke der Antiresonanzelemente und eine exakte Positionierung an vorgegebenen azimutalen Positionen nicht einfach zu erreichen ist, möglichst vermieden werden.

### Zusammenfassung der Erfindung

Hinsichtlich des Verfahrens zur Herstellung der Antiresonanten Hohlkernfaser wird diese Aufgabe ausgehend von einem Verfahren der eingangs genannten Gattung erfindungsgemäß dadurch gelöst, dass beim Elongieren die primäre Vorform kontinuierlich einer Heizzone mit einer Zufuhrgeschwindigkeit zugeführt, in der Heizzone zonenweise erweicht, und mit einer Abzugsgeschwindigkeit aus der Heizzone abgezogen wird, wobei die Zufuhrgeschwindigkeit so eingestellt wird, dass sich ein Durchsatz von mindestens 0,8 g/min und eine mittlere Aufenthaltsdauer in der Heizzone im Bereich von 5 bis 25 min ergeben, und wobei eine temperaturgeregelte Heizzone eingesetzt wird, deren Soll-Temperatur auf +/- 0.1 °C genau gehalten wird.

Ausgangspunkt für die Herstellung der Antiresonanten Hohlkernfaser ist eine Vorform, die hier auch als "primäre Vorform" bezeichnet wird. Die Herstellung der primären Vorform umfasst üblicherweise den Einbau und das Verbinden von Antiresonanzelement-Vorformlingen mit einem Hüllrohr unter Bildung eines sogenannten "Canes". Die primäre Vorform kann zu der Hohlkernfaser elongiert werden; in der Regel wird der primären Vorform aber zusätzliches Mantelmaterial hinzugefügt, um daraus eine hier als "sekundäre Vorform" bezeichnete Vorform zu erzeugen. Gegebenenfalls wird die Hohlkernfaser durch Elongieren der sekundären Vorform erzeugt. Alternativ werden die primäre Vorform oder die sekundäre Vorform unter Ausbildung eines koaxialen Ensembles von Bauteilen mit einem Überfangzylinder oder mit mehrere Überfangzylindern umgeben und das koaxiale Ensemble direkt zu der Hohlkernfaser elongiert. Der allgemeine Begriff "Vorform" wird hier zur Bezeichnung desjenigen Bauteils oder desjenigen koaxialen Ensembles von Bauteilen verstanden, aus der die Hohlkernfaser letztlich gezogen wird.

Das Hinzufügen von Mantelmaterial erfolgt beispielsweise durch Aufkollabieren eines Überfangzylinders auf die primäre Vorform. Die koaxiale Anordnung aus primärer Vorform und Überfangzylinder wird beim Aufkollabieren des Überfangzylinders elongiert, oder sie wird nicht elongiert. Dabei werden die Antiresonanzelement-Vorformlinge in ihrer Form oder Anordnung verändert, oder sie werden in ihrer Form oder Anordnung nicht verändert.

Die Herstellung der sekundären Vorform umfasst eine Anzahl von Verfahrensschritten, bei denen Ausgangselemente der Hohlkernfaser hergestellt und zueinander positioniert werden und mindestens einen Heißverformungsschritt. Jedes der Ausgangselemente und weist eine gewisse Abweichung von seiner Sollgeometrie auf und jeder Schritt der Positionierung und Umformung führt zwangsläufig zu Geometrieabweichungen, die sich in der fertigen Vorform zu einem absoluten Geometriefehler aufsummieren. Insbesondere die Heißumformung von Glas kann bei geringsten Abweichungen von einem idealen in der Regel zylindersymmetrischen Temperaturprofil der Heizzone zu einer ungewollten und nicht reproduzierbaren Verformung führen. Derartige Verformungen können auch auf Druck- und Temperaturverhältnissen beim Elongieren oder beim Faserziehprozess beruhen, die sich nur schwierig umgehen oder vermeiden lassen.

Das erfindungsgemäße Verfahren zielt darauf ab, die verformende Wirkung derartiger Druck- und Temperaturverhältnisse beim Elongieren und beim Faserziehprozess zu kompensieren.

Zu diesem Zweck ist vorgesehen, dass das Elongieren der primären Vorform so geführt wird, dass nach Beendigung des Elongierschrittes mindestens ein Teil der vormaligen rohrförmigen und im Querschnitt runden Antiresonanzelement-Vorformlinge der primären Vorform eine ovale Außenquerschnittsform aufweist.

Beim Elongieren der primären Vorform wird zusätzliches Mantelmaterial aufgebracht, oder es wird kein zusätzliches Mantelmaterial aufgebracht. Ergebnis des Elongierschritts ist eine sekundäre Vorform oder Ergebnis ist ein anderes Halbzeug, welches gegebenenfalls einer weiteren Verarbeitung zur sekundären Vorform bedarf.

Es hat sich als günstig erwiesen, wenn die meisten - vorzugsweise alle - ursprünglich runden Strukturelemente der ehemaligen primären Vorform im Elongierprozess geometrisch so verändert werden, dass sie nach dem Elongierprozess eine nicht-runde, ovale und im Idealfall elliptische radiale Querschnittsform haben. Denn im nachfolgenden Faserziehprozess findet eine weitere geometrische Veränderung statt, infolge der Hohlräume mit ovalem radialem Querschnitt zu Hohlräumen mit rundem radialem Querschnitt umgeformt werden.

Es wurde gefunden, dass sich ein für diese Kompensation günstiges Maß an Ovalität der Querschnittsform der elongierten Strukturelemente durch die Längen ihrer längsten und kürzesten Achsen (im Querschnitt) beschreiben lässt. Das Verhältnis der im Querschnitt längsten Querschnittsachse A_{L} und der im Querschnitt kürzesten Querschnittsachse A_{K} liegt im Bereich zwischen 1,01 und 1,27. Wichtig ist dabei die Orientierung der Ovale an der Innenmantelfläche des ehemaligen Hüllrohres: nämlich so, dass die kürzeste Querschnittsachse A_{K} in radialer Richtung verläuft, und die längste Querschnittsachse A_{L} verläuft tangential zur ehemaligen Innenmantelfläche.

Die Antiresonanzelement-Vorformlinge können aus einem Strukturelement, wie etwa einem einfachen Rohrelement, oder aus mehreren Strukturelementen zusammengesetzt sein. Im Fall mehrerer Strukturelemente sind diese beispielsweise miteinander verschachtelt und bilden im einfachsten Fall ein ARE-Außenrohr, in das ein ARE-Innenrohr eingesetzt ist.

Beim Elongieren wird die primäre Vorform kontinuierlich einer Heizzone mit einer Zufuhrgeschwindigkeit zugeführt, in der Heizzone zonenweise erweicht, und mit einer Abzugsgeschwindigkeit aus der Heizzone abgezogen.

Bei zu hoher Zufuhrgeschwindigkeit kann es zu Temperaturgradienten in der primären Vorform kommen, der dazu führen kann, dass die darin auf verschiedenen radialen Positionen verteilten Antiresonanzelement-Vorformlinge unterschiedliches Elongierverhalten zeigen. Eine zu geringe Zufuhrgeschwindigkeit kann zu unerwünschten Deformationen der Antiresonanzelement-Vorformlinge führen.

Als geeigneter Kompromiss hat es sich erwiesen, wenn die Zufuhrgeschwindigkeit so eingestellt wird, dass sich ein Durchsatz von mindestens 0,8 g/min und eine mittlere Aufenthaltsdauer in der Heizzone im Bereich von 5 bis 25 min ergeben.

Die Temperatur der Heizzone beim Heißformprozess sollte möglichst konstant sein. Daher beim Heißformprozess gemäß Verfahrensschritt (d) ein temperaturgeregeltes Heizelement eingesetzt, dessen Soll-Temperatur auf +/- 0.1 °C genau gehalten wird.

Dadurch können Temperaturschwankungen im Heißformprozess auf weniger als +/- 0.5°C begrenzt werden.

Bei einer besonders bevorzugten Verfahrensweise, die sich auf Antiresonanzelement-Vorformlinge aus einem einfachen rohrförmigen Strukturelement bezieht, haben die Rohrelemente eine ovale, vorzugsweise elliptische, Außenquerschnittsform mit dem Achsenlängenverhältnis A_{L}/A_{K} im Bereich zwischen 1,07 und 1,27.

Eine weitere besonders bevorzugte Verfahrensweise bezieht sich auf Antiresonanzelement-Vorformlinge, die sich aus mehreren, miteinander verschachtelten Strukturelementen zusammensetzen und mindestens ein ARE-Außenrohr und eine in dem ARE-Außenrohr und parallel zur ARE-Außenrohr-Längsachse verlaufendes ARE-Innenrohr umfassen.

Bei derartigen Antiresonanzelement-Vorformlingen ist das ARE-Innenrohr an der Innenseite der ARE-Außenrohrwandung fixiert. Bei einem zu kleinen Kontaktbereich zwischen dem ARE-Innenrohr und dem ARE-Außenrohr kann es - auch aufgrund der Oberflächenspannung bei einem Heißformprozesse zur Ablösung und Dezentrierung des ARE-Innenrohres innerhalb des ARE-Außenrohres kommen. Um dem entgegenzuwirken, hat es sich als vorteilhaft erwiesen, wenn die ARE-Außenrohre eine ovale, vorzugsweise elliptische, Außenquerschnittsform mit dem Achsenlängenverhältnis A_{L}/A_{K} im Bereich zwischen 1,07 und 1,27 haben, und die ARE-Innenrohre haben eine ovale, vorzugsweise elliptische, Außenquerschnittsform mit dem Achsenlängenverhältnis A_{L}/A_{K} im Bereich zwischen 1,01 und 1,05.

Die vergleichsweise große Ovalität der ARE-Außenrohre bewirkt eine Vergrößerung des Kontaktbereichs mit den ARE-Innenrohren.

Die primäre Vorform hat vor dem Elongieren vorzugsweise einen Außendurchmesser im Bereich von 20 bis 70 mm.

Denn je größer der Durchmesser ist, umso langsamer ist die Nachführgeschwindigkeit beim Elongieren und umso länger ist die Dauer, der jedes axiale Teilstück der Vorform der hohen Temperatur der Heizzone ausgesetzt ist. Bei zu langsamer Nachführgeschwindigkeit beim Elongieren deformieren jedoch die Strukturelemente der Antiresonanzelement-Vorformlinge. Daher liegt der Durchmesser der primären Vorform vorzugsweise bei maximal 70 mm. Und der Durchmesser der primären Vorform beträgt vorzugsweise mindestens 20 mm. Denn es hat sich gezeigt, bei kleineren Durchmessern die thermische Trägheit der Vorform zu gering ist, um etwaige Temperaturschwankungen in der Heizzone auszugleichen.

Bei zu hoher Zufuhrgeschwindigkeit kann es zu Temperaturgradienten in der primären Vorform kommen, der dazu führen kann, dass die darin auf verschiedenen radialen Positionen verteilten Antiresonanzelement-Vorformlinge unterschiedliches Elongierverhalten zeigen. Eine zu geringe Zufuhrgeschwindigkeit kann zu unerwünschten Deformationen der Antiresonanzelement-Vorformlinge führen. Als geeigneter Kompromiss hat es sich erwiesen, wenn die Zufuhrgeschwindigkeit so eingestellt wird, dass sich ein Durchsatz im Bereich von 3,3 g/min bis 85 g/min ergibt.

Zur Verminderung absoluter Geometriefehler ist ein großes Ausziehverhältnis beim Elongieren erwünscht. Andererseits geht ein großes Ausziehverhältnis mit entsprechend großen Umformprozesse und Materialbewegungen einher, was leicht zu unerwünschten Deformationen bei den filigranen Strukturelementen der Antiresonanzelement-Vorformlinge führen kann.

Als geeigneter Kompromiss hat sich als vorteilhaft erweisen, wenn das Ausziehverhältnis beim Elongieren auf einen Wert im Bereich von 1,05 bis 10, vorzugsweise auf einen Wert im Bereich von 1,05 bis 5 eingestellt wird.

Bei einer bevorzugten Verfahrensvariante umfasst das Anordnen der Antiresonanzelement-Vorformlinge und/oder das Elongieren der primären Vorform, und/oder das Ziehen der Hohlkernfaser eine Fixierungs-Maßnahme und/oder eine Versiegelungsmaßnahme unter Einsatz einer amorphe SiO₂-Partikel enthaltenden Versiegelungs- oder Verbindungsmasse.

Die zum Versiegeln oder Fixieren eingesetzte Versiegelungs- oder Verbindungsmasse enthält amorphe SiO₂-Partikel, die beispielsweise in einer Dispersionsflüssigkeit aufgenommen sind. Diese Masse wird zwischen den zu verbindenden beziehungsweise zu versiegelnden Flächen aufgetragen und ist beim Einsatz in der Regel pastös. Beim Trocknen bei niedriger Temperatur wird die Dispersionsflüssigkeit teilweise oder vollständig entfernt und die Masse verfestigt. Die Versiegelungs- oder Verbindungsmasse und insbesondere die nach dem Trocknen erhaltene, verfestigte SiO₂-haltige Versiegelungs- oder Verbindungsmasse genügt den Anforderungen zur Fixierung und Verdichtung. Die zum Trocknen erforderliche Temperatur liegt unterhalb von 300 °C, was die Einhaltung der Maßhaltigkeit der Vorform begünstigt und thermische Beeinträchtigungen vermeidet. Ein Erhitzen auf höhere Temperaturen um 800 °C, beispielsweise beim Elongieren der Vorform zur Hohlkernfaser, führt zu einer weiteren thermischen Verfestigung der Versiegelungs- oder Verbindungsmasse, die auch geeignet ist, opakes oder transparentes Glas zu bilden. Dies geschieht durch Sintern oder Verglasen, wobei das Sintern zu opakem Glas vergleichsweise niedrigere Temperaturen und/oder kurze Erhitzungsdauern erfordert als ein Verglasen bis zur vollständigen Transparenz. Die Versiegelungs- oder Verbindungsmasse kann somit durch Erwärmen vollständig verdichtet und durch Erhitzen beim Heißformprozess verglast werden.

Beim Heißformprozess zersetzt sich die Versiegelungs- oder Verbindungsmasse nicht und sie setzt wenig an Verunreinigungen frei. Sie zeichnet sich somit durch thermische Stabilität und Reinheit beim Heißformprozess aus und sie vermeidet Verformungen infolge unterschiedlicher thermischer Ausdehnungskoeffizienten.

Die Versiegelungs- und Verbindungsmasse ist auch vorteilhaft einsetzbar, um beim Elongieren der primären Vorform und/oder beim Ziehen der Hohlkernfaser offene Enden der Antiresonanzelement-Vorformlinge und/oder einzelne Strukturelemente der Antiresonanzelement-Vorformlinge und/oder ein etwaigen Ringspalt zwischen Rohrelementen zu verschleißen.

Auf diese Weise können die einzelnen Bestandteile der primären Vorform und/oder sekundären Vorform beim Elongieren beziehungsweise beim Faserziehprozess unterschiedlichen Innendrücken ausgesetzt werden.

Die Exaktheit der Positionierung der Vorformlinge an der Innenmantelfläche des Hüllrohres wird weiter verbessert, indem die Hüllrohr-Innenseite und/oder die Hüllrohr-Außenseite und/oder die ARE-Außenrohre-Innenseite und/oder die ARE-Außenrohr-Außenseite durch spanende Bearbeitung erzeugt wird, insbesondere durch Bohren, Fräsen, Schleifen, Honen und/oder Polieren

Diese Bearbeitungstechniken liefern im Vergleich zu anderen bekannten Umformtechniken unter Einsatz von Hitze und Druck genauere und filigranere Strukturen und sie vermeiden Verunreinigungen der Oberflächen durch Formwerkzeuge, wie beispielsweise Düsen, Pressen oder Schmelzformen.

Die spanende mechanische Bearbeitung umfasst vorzugsweise auch eine Strukturierung der Hüllrohr-Innenseite im Bereich von Soll-Positionen der Antiresonanzelement-Vorformlinge, indem diese mit einer sich in Richtung der Hüllrohr-Längsachse erstreckenden Längsstruktur versehen wird. Diese Längsstruktur umfasst beispielsweise Längsschlitze und/oder Längsrillen in der Hüllrohr-Innenwandung, die parallel zur Hüllrohr-Längsachse verlaufen und die bevorzugt durch Bohren, Sägen, Fräsen Schneiden oder Schleifen erzeugt werden.

Die sich in Richtung der Hüllrohr-Längsachse erstreckende Längsstruktur dient als Positionierungshilfe für die Antiresonanzelement-Vorformlinge. Sie erleichtert es, dass die Antiresonanzelement-Vorformlinge vorgegebene definierte Positionen an der Innenseite des Hüllrohres einnehmen.

Die Genauigkeit der Positionierung der Vorformlinge an der Innenmantelfläche des Hüllrohrs wird verbessert, wenn die oberen stirnseitigen Enden der Strukturelemente mittels einer Positionierungsschablone an der Soll-Position positioniert werden.

Die Positionierungsschablone weist beispielsweise einen in die Hüllrohr-Innenbohrung ragenden Schaft auf, der mit Halteelementen in Form mehrerer radial nach außen weisender Haltearme versehen ist.

Die konstruktiv vorgegebene sternförmige Anordnung der Halteelemente erleichtert die exakte Positionierung der Antiresonanzelement-Vorformlinge an den jeweiligen Soll-Positionen und deren Fixierung, beispielsweise mittels der ober erläuterten Versiegelungs- oder Verbindungsmasse. Dabei wird die Positionierungsschablone vorzugsweise ausschließlich im Bereich der Hüllrohr-Stirnseiten eingesetzt, vorzugsweise im Bereich beider Hüllrohr-Stirnseiten.

Es hat sich außerdem eine Verfahrensweise bewährt, bei der beim Elongieren der primären Vorform gemäß Verfahrensschritt (d) und/oder beim Ziehen der Hohlkernfaser gemäß Verfahrensschritt (e) mehrere Bestandteile der Vorform aus Quarzglas gemeinsam erhitzt und erweicht werden, wobei das Quarzglas mindestens einiger der Vorform-Bestandteile mindestens einen Dotierstoff enthält, der die Viskosität von Quarzglas absenkt.

Bestandteile der primären Vorform umfassen das Hüllrohr und die darin angeordneten Antiresonanzelement-Vorformlinge. Die sekundäre Vorform enthält zusätzliches Mantelmaterial, das beispielsweise in Form eines Überfangzylinders oder mehrerer Überfangzylinder bereitgestellt und auf die primäre Vorform aufkollabiert wird.

Als die Viskosität von Quarzglas absenkende Dotierstoffe kommen vorzugsweise Fluor, Chlor und/oder Hydroxylgruppen zum Einsatz.

Die Dotierung ermöglicht die Anpassung der thermischen Ausdehnungskoeffizienten von benachbarten Vorform-Bestandteilen, um Spannungen zu vermeiden oder zu vermindern. Sie kann auch dazu eingesetzt werden, um die thermische Stabilität eines Bestandteils zu Gunsten der Stabilität eines benachbarten Bestandteils zu verringern.

So hat es sich beispielsweise als günstig erwiesen, wenn das Quarzglas des Hüllrohres bei einer Messtemperatur von 1250 °C eine um mindestens 0,5 dPa·s höhere Viskosität, vorzugsweise eine um mindestens 0,6 dPa·s, höhere Viskosität, aufweist als das Quarzglas von zusätzlich aufgebrachtem Mantelmaterial (bei Angabe der Viskosität als logarithmischer Wert in dPas).

Insbesondere im Hinblick auf eine geringe optische Dämpfung und eine große optische Übertragungs-Bandbreite der Hohlkernfaser hat es sich als besonders vorteilhaft erwiesen, wenn die Antiresonanzelemente um den Hohlkern mit einer ungeradzahligen Symmetrie angeordnet sind.

Hinsichtlich der Herstellung der Vorform für die Hohlkernfaser wird die oben angegebene technische Aufgabe ausgehend von einem Verfahren der eingangs genannten Gattung erfindungsgemäß dadurch gelöst, dass beim Elongieren die primäre Vorform kontinuierlich einer Heizzone mit einer Zufuhrgeschwindigkeit zugeführt, in der Heizzone zonenweise erweicht, und mit einer Abzugsgeschwindigkeit aus der Heizzone abgezogen wird, wobei die Zufuhrgeschwindigkeit so eingestellt wird, dass sich ein Durchsatz von mindestens 0,8 g/min und eine mittlere Aufenthaltsdauer in der Heizzone im Bereich von 5 bis 25 min ergeben, und wobei eine temperaturgeregelte Heizzone eingesetzt wird, deren Soll-Temperatur auf +/- 0.1°C genau gehalten wird.

Beim Elongieren der primären Vorform wird zusätzliches Mantelmaterial aufgebracht, oder es wird kein zusätzliches Mantelmaterial aufgebracht. Ergebnis des Elongierschritts ist eine sekundäre Vorform oder Ergebnis ist ein anderes Halbzeug in Form der elongierten primären Vorform, welche gegebenenfalls einer weiteren Verarbeitung zur sekundären Vorform bedarf. In jedem Fall zeichnet sich die elongierte primäre Vorform dadurch aus, dass mindestens ein Teil der Antiresonanzelement-Vorformlinge eine ovale Querschnittsform haben, die einerseits dazu geeignet ist, einer Verformung entgegenzuwirken, die beim Elongieren der sekundären Vorform zur Hohlkernfaser stattfinden kann, und die andererseits die Kontaktbereiche zwischen verschachtelten Strukturelementen vergrößern und damit zu einer höheren mechanischen Stabilität beitragen kann. Diese Verfahrensweise ermöglicht eine präzisere Fertigung der Hohlkernfaser.

Maßnahmen zur Herstellung der Vorform sind weiter oben im Zusammenhang der Herstellung der Hohlkernfaser erläutert und diese Erläuterungen werden hiermit einbezogen.

### Definitionen

Einzelne Verfahrensschritte und Begriffe der obigen Beschreibung werden im Folgenden ergänzend definiert. Die Definitionen sind Bestandteil der Beschreibung der Erfindung. Bei einem sachlichen Widerspruch zwischen einer der folgenden Definitionen und der übrigen Beschreibung ist das in der Beschreibung Gesagte maßgeblich.

### Antiresonanzelemente

Die Antiresonanzelemente können einfache oder verschachtelte Strukturelemente der Hohlkernfaser sein. Sie haben mindestens zwei Wandungen, die aus Richtung des Hohlkerns gesehen eine negative Krümmung haben (konvex) oder keine Krümmung haben (plan, gerade). Sie bestehen in der Regel aus einem Material, das für das Arbeitslicht transparent ist, beispielsweise aus Glas, insbesondere aus dotiertem oder nicht dotiertem SiO₂, einem Kunststoff, insbesondere aus einem Polymer, aus einem Verbundwerkstoff oder aus kristallinem Material.

### Antiresonanzelement-Vorformling / Antiresonanzelement-Vorstufe

Als Antiresonanzelement-Vorformlinge werden Bauteile oder Bestandteile der Vorform bezeichnet, die im Wesentlichen durch einfaches Langziehen beim Faserziehprozess zu Antiresonanzelementen in der Hohlkernfaser werden. Als Antiresonanzelement-Vorstufen werden Bauteile oder Bestandteile der Vorform bezeichnet, die erst durch Umformung zu Antiresonanzelement-Vorformlingen oder direkt zu Antiresonanzelementen werden. Die Antiresonanzelement-Vorformlinge können einfache oder verschachtelte Bauteile sein, an denen zusätzlich Positionierhilfen fixiert sein können. Sie liegen ursprünglich in der primären Vorform (Cane) vor.

Durch Weiterverarbeitung der primären Vorform, insbesondere durch Heißumformschritte, können Zwischenprodukte entstehen, in denen die ursprünglichen Antiresonanzelement-Vorformlinge in einer gegenüber der ursprünglichen Form veränderten Form vorliegen. Die veränderte Form wird hier ebenfalls als Antiresonanzelement-Vorformling oder auch als Antiresonanzelement-Vorstufe bezeichnet.

### Vorform / primäre Vorform / sekundäre Vorform

Die Vorform ist dasjenige Bauteil, aus dem die Antiresonante Hohlkernfaser gezogen wird. Es ist eine primäre Vorform oder eine durch Weiterverarbeitung der primären Vorform erzeugte sekundäre Vorform. Die Weiterverarbeitung der primären Vorform zu einer sekundären Vorform, aus der die Hohlkernfaser gezogen wird, kann eine einmalige oder wiederholte Durchführung von einem oder mehreren der folgenden Heißformprozesse umfassen:
(i) Elongieren,
(ii) Kollabieren,
(iii) Kollabieren und gleichzeitiges Elongieren,
(iv) Aufkollabieren von zusätzlichem Mantelmaterial,
(v) Aufkollabieren von zusätzlichem Mantelmaterial und anschließendes Elongieren,
(vi) Aufkollabieren von zusätzlichem Mantelmaterial und gleichzeitiges Elongieren.

### Elongieren / Kollabieren

Beim Elongieren wird die primäre Vorform gelängt. Die Längung kann ohne gleichzeitiges Kollabieren erfolgen. Das Elongieren kann maßstäblich erfolgen, so dass sich beispielsweise die Form und Anordnung von Bauteilen oder Bestandteilen der primären Vorform im elongierten Endprodukt widerspiegeln. Beim Elongieren kann die primäre Vorform aber auch nicht-maßstäblich gezogen und ihre Geometrie verändert werden.

Beim Kollabieren wird eine Innenbohrung verengt oder Ringspalte zwischen rohrförmigen Bauteil werden geschlossen oder verengt. Das Kollabieren geht in der Regel mit einem Elongieren einher.

### Hohlkern / Innerer Mantelbereich / Äußerer Mantelbereich / Cane

Das Ensemble aus mindestens einem Hüllrohr und darin lose aufgenommenen oder fest fixierten Vorformlingen oder Vorstufen für Antiresonanzelemente wird hier auch als "primäre Vorform" oder "Cane" bezeichnet. Die primäre Vorform (Cane) umfasst den Hohlkern und einen Mantelbereich. Dieser Mantelbereich wird auch als "innerer Mantelbereich" bezeichnet, wenn es auch einen "äußeren Mantelbereich" gibt, der beispielsweise durch Aufkollabieren auf den Cane erzeugt worden ist, und wenn zwischen diesen Mantelbereichen unterschieden werden soll. Die Bezeichnungen "innerer Mantelbereich" und "äußerer Mantelbereich" werden auch für die entsprechenden Bereiche in der Hohlkernfaser oder in Zwischenprodukten genutzt, die durch Weiterverarbeitung der primären Vorform erhalten werden.

Die Bezeichnung "Rohrinnenseite" wird auch als Synonym für "Rohr-Innenmantelfläche" und die Bezeichnung "Rohraußenseite" wird auch als Synonym für "Rohr-Außenmantelfäche" verwendet. Der Begriff "Innenbohrung" in Verbindung mit einem Rohr besagt nicht, dass die Innenbohrung durch einen Bohrvorgang erzeugt worden ist.

### Spanende Bearbeitung

Darunter werden trennende mechanische Fertigungsverfahren zur trennenden Bearbeitung eines Werkstücks verstanden, insbesondere Drehen, Schneiden, Bohren, Sägen, Fräsen und Schleifen. Durch diese Bearbeitung wird eine sich in Richtung der Hüllrohr-Längsachse erstreckende Längsstruktur geschaffen, die als Positionierungshilfe für die Antiresonanzelement-Vorformlinge dient. Die Längsstruktur ist von der Hüllrohr-Innenmantelfläche zugänglich; sie kann sich auch bis zur Außenmantelfläche durch die gesamte Hüllrohr-Wandung erstrecken.

### Teilchengröße und Teilchengrößenverteilung

Teilchengröße und Teilchengrößenverteilung der SiO₂-Partikel werden anhand der D₅₀-Werte charakterisiert. Diese Werte werden aus Partikelgrößen-Verteilungskurven entnommen, die das kumulative Volumen der SiO₂-Partikel in Abhängigkeit von der Partikelgröße zeigen. Die Teilchengrößenverteilungen werden häufig anhand der jeweiligen D₁₀-, D₅₀- und D₉₀-Werte charakterisiert. Dabei kennzeichnet der D₁₀-Wert diejenige Teilchengröße, die von 10% des kumulativen Volumens der SiO₂-Teilchen nicht erreicht wird, und dementsprechend der D₅₀-Wert und der D₉₀-Wert diejenige Partikelgrößen, die von 50% beziehungsweise von 90% des kumulativen Volumens der SiO₂-Partikel nicht erreicht wird. Die Partikelgrößenverteilung wird durch Streulicht- und Laserbeugungsspektroskopie nach ISO 13320 ermittelt.

### Ausführungsbeispiel

Nachfolgend wird die Erfindung anhand eines Ausführungsbeispiels und einer Zeichnung näher erläutert. Im Einzelnen zeigt
- **Figur 1**: eine primäre Vorform mit einem Hüllrohr und darin positionierten und fixierten Antiresonanzelement-Vorformlingen zur Herstellung einer Vorform für eine Hohlkernfaser anhand einer Ansicht auf den radialen Querschnitt in schematischer Darstellung,
- **Figur 2**: ein Foto einer sekundären Vorform mit vorgeformten Antiresonanzelement-Vorformligen in einer Ansicht auf den radialen Querschnitt,
- **Figur 3**: Bearbeitungsstufen von der primären Vorform bis zur Antiresonanten Hohlkernfaser, und
- **Figur 4**: eine Skizze zur Erläuterung von Kraftverhältnissen beim Heißverarbeiten verschachtelter Antiresonanzelemente.

Bei der Herstellung der Hohlkernfaser beziehungsweise der Vorform für die Hohlkernfaser sind eine Vielzahl von Bauteilen miteinander zu verbinden. Darüber hinaus kann es bei der Durchführung von Heißformprozessen hilfreich sein, vorhandene Spalte oder Kanäle der Vorform zu versiegeln. Zum Verbinden beziehungsweise zur Versiegelung wird eine auf SiO₂ basierende Versiegelungs- oder Verbindungsmasse eingesetzt, wie sie aus der DE 10 2004 054 392 A1 bekannt ist. Dabei wird durch Nassvermahlen von Quarzglaskörnung ein wässriger Schlicker erzeugt, der amorphe SiO₂-Partikel mit einer Partikelgrößenverteilung enthält, die durch einen D₅₀-Wert von etwa 5 µm und durch einen D₉₀-Wert von etwa 23 µm gekennzeichnet ist. Dem Basisschlicker wird weitere amorphe SiO₂-Körnung mit einer mittleren Korngröße von etwa 5 µm zugemischt. Der als Verbindungsmasse eingesetzte Schlicker hat einen Feststoffgehalt von 90%, der zu mindestens 99,9 Gew.-% aus SiO₂ besteht.

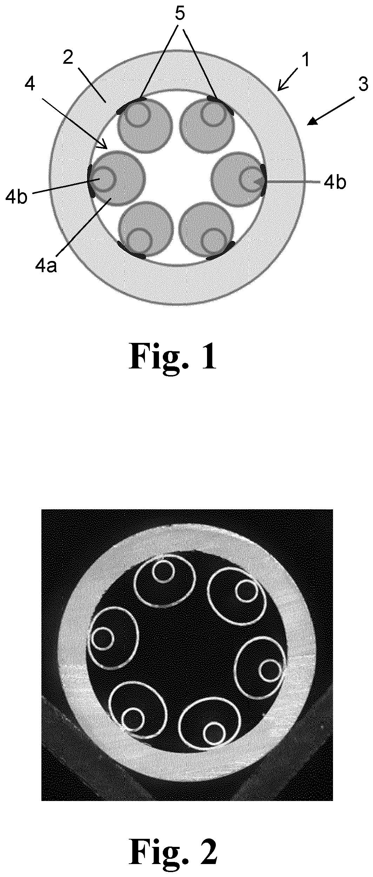

**Figur 1** zeigt schematisch einen Cane (primäre Vorform) 3 mit einem Hüllrohr 1 mit einer Hüllrohr-Wandung 2, an deren Innenmantelfläche an zuvor definierten azimutalen Positionen im gleichmäßigen Abstand Antiresonanzelement-Vorformlinge 4 fixiert sind; im Ausführungsbeispiel sind es sechs Vorformlinge 4, in einer anderen, nicht dargestellten bevorzugten Ausführungsform ist es eine ungeradzahlige Anzahl von Vorformlingen.

Das Hüllrohr 1 besteht aus Quarzglas und hat eine Länge von 1000 mm, einen Außendurchmesser von 27 mm und einen Innendurchmesser von 20 mm. Die Antiresonanzelement-Vorformlinge 4 liegen als Ensemble miteinander verschachtelter Strukturelemente aus einem ARE-Außenrohr 4a und einem ARE-Innenrohr 4b vor. Das ARE-Außenrohr 4a hat einen Außendurchmesser von 6,2 mm und das ARE-Innenrohr 4b hat einen Außendurchmesser von 2,5 mm. Die Wandstärke beider Strukturelemente (4a; 4b) ist gleich und beträgt 0,3 mm. Die Längen von ARE-Außenrohr 4a und ARE-Innenrohr 4b entsprechen der Hüllrohr-Länge.

Das Hüllrohr 1 wird in einem Vertikalziehverfahren ohne Formwerkzeug mit zweistufigem Elongierprozess hergestellt. In der ersten Stufe wird ein Ausgangshohlzylinders aus Glas zur Einstellung von Ausgangshohlzylinder-Endmaßen mechanisch bearbeitet. Laut Endmaß beträgt der Außendurchmesser 90 mm und das Durchmesserverhältnis von Außen- und Innendurchmesser beträgt 2,5. Der Ausgangszylinder wird in einem ersten Elongierprozess mit vertikal orientierter Längsachse kontinuierlich einer Heizzone mit einer Heizzonenlänge von 200 mm zugeführt, darin bereichsweise erweicht und aus dem erweichten Bereich wird ein Zwischenzylinder abgezogen. Dieser wird in einem zweiten Elongierprozess mit vertikal orientierter Längsachse kontinuierlich einer anderen Heizzone mit einer Heizzonenlänge von 100 mm zugeführt, darin bereichsweise erweicht und aus dem erweichten Bereich ein Rohrstrang abgezogen. Aus dem Rohrstrang wird das Hüllrohr durch Ablängen erhalten.

Die Fixierung der Antiresonanzelement-Vorformlinge 4 an der Innenwand des Hüllrohres 1 erfolgt mittels der auf SiO₂ basierenden Verbindungsmasse 5.

Die Verbindungsmasse 5 wird auf der Hüllrohr-Innenmantelfläche lokal im Bereich der stirnseitigen Enden aufgetragen und die Antiresonanzelement-Vorformlinge werden darauf unter Einsatz einer Positionierungs-Schablone mit konstruktiv vorgegebener sternförmiger Anordnung von Haltearmen für die einzelnen Antiresonanzelement-Vorformlinge 4 aufgesetzt. Die Positionierungs-Schablone ist dabei auf den Bereich um die beiden stirnseitigen Hüllrohr-Enden beschränkt.

Durch diese Methode wird eine genaue und reproduzierbare Verbindung zwischen Hüllrohr 1 und Antiresonanzelement-Vorformlingen 4 geschaffen. Zur Fixierung genügt eine Verfestigung der Verbindungsmasse 5 bei niedriger Temperatur unterhalb von 300 °C, so dass eine starke Erwärmung der umliegenden Bereiche und somit eine Verformung der Antiresonanzelement-Vorformlinge 4 vermieden wird.

Die primäre Vorform 3 wird mit einem Überfangzylinder aus Quarzglas überfangen, wobei der Überfangzylinder auf das Hüllrohr 1 aufkollabiert und gleichzeitig wird das Rohr-Ensemble zu einer sekundären Vorform elongiert. Der Überfangzylinder hat einen Außendurchmesser von 63,4 mm und eine Wandstärke von 17 mm.

Beim Kollabier- und Elongierprozess wird die koaxiale Anordnung von Hüllrohr 1 und Überfangzylinder bei vertikal orientierter Längsachse von unten kommend einer temperaturgeregelten Heizzone zugeführt und darin mit dem oberen Ende der Anordnung beginnend zonenweise erweicht.

Die Heizzone wird auf eine Soll-Temperatur von 1600 °C mit einer Regelgenauigkeit von +/- 0.1°C gehalten. Dadurch können Temperaturschwankungen im Heißformprozess auf weniger als +/- 0.5°C begrenzt werden.

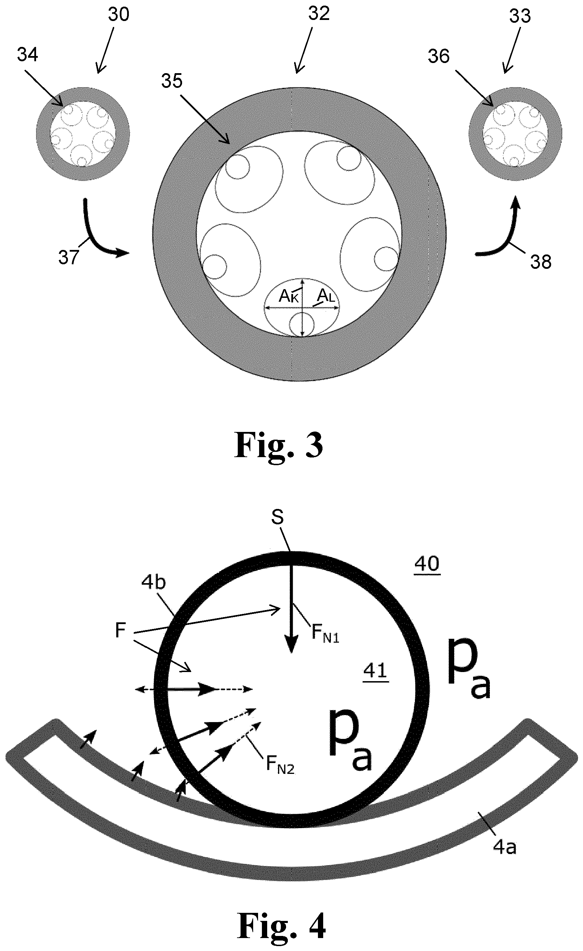

Beim Kollabier- und Elongierschritt wird den vormaligen rohrförmigen Antiresonanzelement-Vorformlingen 4 der primären Vorform 3 eine ovale Außenquerschnittsform aufgeprägt, indem im hohlen Kernbereich und in den rohrförmigen Antiresonanzelement-Vorformlingen 4 derselbe Innendruck erzeugt und aufrechterhalten wird. **Figur 4** skizziert die dabei auftretenden Kräfteverhältnisse. Sowohl im hohlen Kernbereich 40 als auch in der Innenbohrung des ARE-Innenrohres 4b herrscht beim Elongieren Umgebungsdruck pₐ. Bei einem Überdruck von 2,36 mbar im Hohlraum des ARE-Innenrohres 4b (gegenüber dem außerhalb davon anliegenden Druck) wäre das ARE-Innenrohr 4a während des Elongierens stabil. Ohne den Innendruck wirken Kräfte wie durch die Richtungspfeile F angedeutet. Das Verhältnis der normalen Kraft F_{N1} im oberen Scheitelpunkt "S" zur resultierenden Normalkraft F_{N2} an den Seiten der ARE-Innenrohr-Wandung liegt zwischen 1,07 und 1,27 (1,07 < F_{N1}/ F_{N2} < 1,27), Infolge dieses Kraftverhältnisses wird das ARE-Innenrohr 4b beim Elongieren oval und näherungsweise elliptisch, wobei die lange Achse der Ellipse tangential zur Innenwandung des ARE-Außenrohres 4a und die kürzere Achse senkrecht dazu verlaufen.

Entsprechende Betrachtungen für das ARE-Außenrohr 4a ergeben eine ovale Außenquerschnittsform, die durch ein Achsenlängenverhältnis A_{L}/A_{K} gekennzeichnet ist, das zwischen 1,07 und 1,27 liegt (1,07 < A_{L}/A_{K} < 1,27).

Die im Kollabier- und Elongierprozess auf diese Weise gebildete sekundäre Vorform hat einen Außendurchmesser von etwa 50 mm und eine aus äußerem Mantel und innerem Mantel zusammengesetzte Mantel-Wanddicke von 16,6 mm. Das Foto von **Figur 2** zeigt die oval geformten ARE-Außenrohre. Die ARE-Innenrohre sind messbar ebenfalls oval verformt, jedoch in einem so geringen Maß, dass die Verformung visuell nicht erkennbar ist.

Die sekundäre Vorform wird zu einer Antiresonanten Hohlkernfaser elongiert. Dazu werden alle Strukturelemente der ehemaligen Antiresonanzelement-Vorformlinge, also ARE-Außenrohr 4a und ARE-Innenrohr 4b, mit der oben erwähnten Versiegelungs- oder Verbindungsmasse verschlossen. Die Verschlussmasse ist dabei nur auf diejenige Stirnseite der Antiresonanzelement-Vorformlinge aufgebracht, die beim Faserziehprozess nach oben weist.

Dieselbe Stirnseite wird anschließend mit einem Halterohr aus Quarzglas verbunden, der gleichzeitig als Gasanschluss dient. Der Halter wird mittels der Versiegelungs- oder Verbindungsmasse am Überfangzylinder und am Hüllrohr fixiert. Beim Faserziehprozess wird die sekundäre Vorform bei vertikal orientierter Längsachse von oben kommend einer temperaturgeregelten Heizzone zugeführt und darin mit dem unteren Ende beginnend zonenweise erweicht. Die Heizzone wird auf eine Soll-Temperatur von etwa 2100 °C mit einer Regelgenauigkeit von +/- 0.1°C gehalten. Dadurch können Temperaturschwankungen im Heißformprozess auf weniger als +/- 0.5°C begrenzt werden. Gleichzeitig wird dem Kernbereich (Hohlkern) Gas zugeführt, so dass sich im Kernbereich ein Innendruck von 4 mbar einstellt.

Durch dem so geführten Faserziehprozess wird die ovale Querschnittsform der ehemaligen Strukturelemente der Antiresonanzelement-Vorformlinge zu einer runden Querschnittsform, so dass eine Antiresonante Hohlkernfaser mit darin eingebetteten Antiresonanzelementen erhalten wird, die eine runde Querschnittsform haben.

**Figur 3** zeigt schematisch die Verfahrensstufen des Prozesses. Aus der primären Vorform 30 mit Antiresonanzelement-Vorformlingen 34 mit rundem Querschnitt wird durch einen Elongier- und Kollabierprozess 37 eine sekundäre Vorform 32 mit elongierten Antiresonanzelement-Vorformlingen 35 mit ovaler Querschnittsform (gekennzeichnet durch die kurze Querschnittsachse A_{K} und die langen Querschnittsachse A_{L}) und diese wird in einem Faserziehprozess 38 zu einer Antiresonante Hohlkernfaser 33 elongiert, die Antiresonanzelemente 36 mit runder Querschnittsform enthält.

## Patentansprüche

1. Verfahren zur Herstellung einer Antiresonanten Hohlkernfaser (33), die einen sich entlang einer Faser-Längsachse erstreckenden Hohlkern und einen den Hohlkern umgebenden inneren Mantelbereich aufweist, der mehrere Antiresonanzelemente umfasst, mit den Verfahrensschritten:
(a) Bereitstellen eines Hüllrohres (1), das eine Hüllrohr-Innenbohrung und eine Hüllrohr-Längsachse aufweist, entlang der sich eine von einer Innenseite und einer Außenseite begrenzte Hüllrohr-Wandung (2) erstreckt,
(b) Bereitstellen einer Anzahl von rohrförmigen Antiresonanzelement-Vorformlingen (4; 34),
(c) Anordnen der Antiresonanzelement-Vorformlinge (4; 34) an Soll-Positionen der Innenseite der Hüllrohr-Wandung (2) unter Bildung einer primären Vorform (3; 30), die einen hohlen Kernbereich und einen inneren Mantelbereich aufweist,
(d) Weiterverarbeitung der primären Vorform (3; 30) zu einer sekundären Vorform (32), aus der die Hohlkernfaser (33) gezogen wird, wobei die Weiterverarbeitung ein Elongieren und optional eine einmalige oder wiederholte Durchführung von einem oder mehreren der folgenden Heißformprozesse umfasst:
(i) Kollabieren,
(ii) Kollabieren und gleichzeitiges Elongieren,
(iii) Aufkollabieren von zusätzlichem Mantelmaterial,
(iv) Aufkollabieren von zusätzlichem Mantelmaterial und anschließendes Elongieren,
(v) Aufkollabieren von zusätzlichem Mantelmaterial und gleichzeitiges Elongieren, und
(e) Ziehen der sekundären Vorform (32) zu der Hohlkernfaser (33), wobei nach dem Elongieren gemäß Verfahrensschritt (d) mindestens ein Teil der vormaligen rohrförmigen Antiresonanzelement-Vorformlinge (4; 34) der primären Vorform (3; 30) eine ovale Außenquerschnittsform aufweist, mit einer längsten Querschnittsachse A_{L} und einer kürzesten Querschnittsachse A_{K}, wobei das Achsenlängenverhältnis A_{L}/A_{K} im Bereich zwischen 1,01 und 1,27 liegt, und wobei die kürzeste Querschnittsachse A_{K} von der Hüllrohr-Längsachse aus gesehen in radialer Richtung verläuft, **dadurch gekennzeichnet, dass** beim Elongieren die primäre Vorform (3; 30) kontinuierlich einer Heizzone mit einer Zufuhrgeschwindigkeit zugeführt, in der Heizzone zonenweise erweicht, und mit einer Abzugsgeschwindigkeit aus der Heizzone abgezogen wird, wobei die Zufuhrgeschwindigkeit so eingestellt wird, dass sich ein Durchsatz von mindestens 0,8 g/min und eine mittlere Aufenthaltsdauer in der Heizzone im Bereich von 5 bis 25 min ergeben, und wobei eine temperaturgeregelte Heizzone eingesetzt wird, deren Soll-Temperatur auf +/- 0.1°C genau gehalten wird.

2. Verfahren nach Anspruch 1, **dadurch gekennzeichnet, dass** sich mindestens ein Teil der rohrförmigen Antiresonanzelement-Vorformlinge (4; 34) aus mehreren, miteinander verschachtelten Strukturelementen (4a; 4b) zusammensetzen und mindestens ein ARE-Außenrohr (4a) und ein in dem ARE-Außenrohr (4a) und parallel zur ARE-Außenrohr-Längsachse verlaufendes ARE-Innenrohr (4b) umfassen, wobei das ARE-Außenrohr (4a) eine ovale, vorzugsweise elliptische, Außenquerschnittsform mit dem Achsenlängenverhältnis A_{L}/A_{K} im Bereich zwischen 1,07 und 1,27 hat, und das ARE-Innenrohr (4b) eine ovale, vorzugsweise elliptische, Außenquerschnittsform mit dem Achsenlängenverhältnis A_{L}/A_{K} im Bereich zwischen 1,01 und 1,05 hat.

3. Verfahren nach einem der vorhergehenden Ansprüche, **dadurch gekennzeichnet, dass** die primäre Vorform (3; 30) einen Außendurchmesser im Bereich von 20 bis 70 mm aufweist.

4. Verfahren nach einem der vorhergehenden Ansprüche, **dadurch gekennzeichnet, dass** beim Elongieren die primäre Vorform (3; 30) kontinuierlich einer Heizzone mit einer Zufuhrgeschwindigkeit zugeführt, in der Heizzone zonenweise erweicht, und mit einer Abzugsgeschwindigkeit aus der Heizzone abgezogen wird, wobei die Zufuhrgeschwindigkeit so eingestellt wird, dass sich ein Durchsatz im Bereich von 3,3 g/min bis 85 g/min ergibt.

5. Verfahren nach einem der vorhergehenden Ansprüche, **dadurch gekennzeichnet, dass** das Ausziehverhältnis beim Elongieren auf einen Wert im Bereich von 1,05 bis 10, vorzugsweise 1,05 bis 5 eingestellt wird.

6. Verfahren nach einem der vorhergehenden Ansprüche, **dadurch gekennzeichnet, dass** das Fixieren der Antiresonanzelement-Vorformlinge (4) unter Einsatz einer amorphe SiO₂-Partikel enthaltenden Versiegelungs- oder Verbindungsmasse (5) erfolgt.

7. Verfahren nach einem der vorhergehenden Ansprüche, **dadurch gekennzeichnet, dass** beim Elongieren der primären Vorform (3; 30) offene Enden der Antiresonanzelement-Vorformlinge (4) und/oder einzelne Strukturelemente (4a; 4b) der Antiresonanzelement-Vorformlinge (4) und/oder ein etwaiger Ringspalt zwischen Rohrelementen mittels einer Versiegelungsoder Verbindungsmasse (5) verschlossen werden.

8. Verfahren nach einem der vorhergehenden Ansprüche, **dadurch gekennzeichnet, dass** die Hüllrohr-Innenseite durch spanende Bearbeitung im Bereich der Soll-Positionen mit einer sich in Richtung der Hüllrohr-Längsachse erstreckenden Längsstruktur versehen wird.

9. Verfahren nach einem der vorhergehenden Ansprüche, **dadurch gekennzeichnet, dass** die oberen stirnseitigen Enden der Strukturelemente (4a; 4b) mittels einer Positionierungsschablone an der Soll-Position positioniert werden.

10. Verfahren nach Anspruch 9, **dadurch gekennzeichnet, dass** die Positionierungsschablone im Bereich einer Hüllrohr-Stirnseite, vorzugsweise im Bereich beider Hüllrohr-Stirnseiten, eingesetzt wird.

11. Verfahren nach einem der vorhergehenden Ansprüche, **dadurch gekennzeichnet, dass** beim Elongieren der primären Vorform (3; 30) gemäß Verfahrensschritt (d) und/oder beim Ziehen der Hohlkernfaser (33) gemäß Verfahrensschritt (e) mehrere Bestandteile der Vorform aus Quarzglas gemeinsam erhitzt und erweicht werden, wobei das Quarzglas mindestens einiger der Vorform-Bestandteile mindestens einen Dotierstoff enthält, der die Viskosität von Quarzglas absenkt.

12. Verfahren nach Anspruch 11, **dadurch gekennzeichnet, dass** gemäß Verfahrensschritt (d) zusätzliches Mantelmaterial aufkollabiert wird, und dass das Quarzglas des Hüllrohres bei einer Messtemperatur von 1250 °C eine um mindestens 0,5 dPa s höhere Viskosität, vorzugsweise eine um mindestens 0,6 dPa s, höhere Viskosität, aufweist als das Quarzglas des zusätzlich aufgebrachten Mantelmaterials (bei Angabe der Viskosität als logarithmischer Wert in dPa s).

13. Verfahren nach einem der vorhergehenden Ansprüche, **dadurch gekennzeichnet, dass** das Anordnen der Antiresonanzelement-Vorformlinge (4; 34) an Soll-Positionen der Innenseite der Hüllrohr-Wandung (2) und/oder das Ziehen der Hohlkernfaser (33) gemäß Verfahrensschritt (d) eine Fixierungs-Maßnahme und/oder eine Versiegelungsmaßnahme unter Einsatz einer amorphe SiO₂-Partikel enthaltenden Versiegelungs- oder Verbindungsmasse (5) umfasst.

14. Verfahren zur Herstellung einer Vorform (32) für eine Antiresonante Hohlkernfaser, die einen sich entlang einer Faser-Längsachse erstreckenden Hohlkern und einen den Hohlkern umgebenden inneren Mantelbereich aufweist, der mehrere Antiresonanzelemente umfasst, mit den Verfahrensschritten:
(a) Bereitstellen eines Hüllrohres (1), das eine Hüllrohr-Innenbohrung und eine Hüllrohr-Längsachse aufweist, entlang der sich eine von einer Innenseite und einer Außenseite begrenzte Hüllrohr-Wandung (2) erstreckt,
(b) Bereitstellen einer Anzahl von rohrförmigen Antiresonanzelement-Vorformlingen (4),
(c) Anordnen der Antiresonanzelement-Vorformlinge (4; 34) an Soll-Positionen der Innenseite der Hüllrohr-Wandung (2) unter Bildung einer primären Vorform (3; 30), die einen hohlen Kernbereich und einen inneren Mantelbereich aufweist,
(d) Weiterverarbeitung der primären Vorform (3; 30) zu einer sekundären Vorform (32) für die Hohlkernfaser, wobei die Weiterverarbeitung ein Elongieren und optional eine einmalige oder wiederholte Durchführung von einem oder mehreren der folgenden Heißformprozesse umfasst:
(i) Kollabieren,
(ii) Kollabieren und gleichzeitiges Elongieren,
(iii) Aufkollabieren von zusätzlichem Mantelmaterial,
(iv) Aufkollabieren von zusätzlichem Mantelmaterial und anschließendes Elongieren,
(v) Aufkollabieren von zusätzlichem Mantelmaterial und gleichzeitiges Elongieren,
wobei nach dem Elongieren gemäß Verfahrensschritt (d) mindestens ein Teil der vormaligen rohrförmigen Antiresonanzelement-Vorformlinge (4; 34) der primären Vorform (3; 30) eine ovale Außenquerschnittsform aufweist, mit einer längsten Querschnittsachse A_{L} und einer kürzesten Querschnittsachse A_{K}, wobei das Achsenlängenverhältnis A_{L}/A_{K} im Bereich zwischen 1,01 und 1,27 liegt, und wobei die kürzeste Querschnittsachse A_{K} von der Hüllrohr-Längsachse aus gesehen in radialer Richtung verläuft, **dadurch gekennzeichnet, dass** beim Elongieren die primäre Vorform (3; 30) kontinuierlich einer Heizzone mit einer Zufuhrgeschwindigkeit zugeführt, in der Heizzone zonenweise erweicht, und mit einer Abzugsgeschwindigkeit aus der Heizzone abgezogen wird, wobei die Zufuhrgeschwindigkeit so eingestellt wird, dass sich ein Durchsatz von mindestens 0,8 g/min und eine mittlere Aufenthaltsdauer in der Heizzone im Bereich von 5 bis 25 min ergeben, und wobei eine temperaturgeregelte Heizzone eingesetzt wird, deren Soll-Temperatur auf +/- 0.1°C genau gehalten wird.

## Claims

1. A method for producing an antiresonant hollow-core fiber (33) comprising a hollow core extending along a fiber longitudinal axis and an inner sheath region which surrounds the hollow core and comprises a plurality of antiresonance elements, comprising the method steps of:
(a) providing a cladding tube (1) which comprises a cladding tube inner bore and a cladding tube longitudinal axis along which a cladding tube wall (2) bounded by an inner side and an outer side extends,
(b) providing a number of tubular antiresonance element preforms (4; 34),
(c) arranging the antiresonance element preforms (4; 34) at target positions on the inner side of the cladding tube wall (2) to form a primary preform (3; 30) which comprises a hollow core region and an inner sheath region,
(d) further processing the primary preform (3; 30) to form a secondary preform (32) from which the hollow-core fiber (33) is drawn, wherein the further processing comprises elongation and optionally a single or repeated performance of one or more of the following hot-forming processes:
(i) collapse,
(ii) collapse and simultaneous elongation,
(iii) collapse of additional sheath material,
(iv) collapse of additional sheath material and subsequent elongation,
(v) collapse of additional sheath material and simultaneous elongation, and
(e) drawing the secondary preform (32) to form the hollow-core fiber (33), wherein, after the elongation according to method step (d), at least a portion of the former tubular antiresonance element preforms (4; 34) of the primary preform (3; 30) has an oval outer cross-sectional shape, with a longest cross-sectional axis A_{L} and a shortest cross-sectional axis A_{K}, wherein the axis length ratio A_{L}/A_{K} is in the range between 1.01 and 1.27, and wherein the shortest cross-sectional axis A_{K} runs in the radial direction when viewed from the cladding tube longitudinal axis, **characterized in that** during elongation the primary preform (3; 30) is continuously fed to a heating zone at a feed rate, is softened zone by zone in the heating zone, and is withdrawn from the heating zone at a withdrawal rate, wherein the feed rate is set such that a throughput of at least 0.8 g/min and an average dwell time in the heating zone in the range of 5 to 25 min is achieved, and wherein a temperature-controlled heating zone is used, the target temperature of which is maintained to an accuracy of +/- 0.1°C.

2. The method according to claim 1, **characterized in that** at least a portion of the tubular antiresonance element preforms (4; 34) are composed of a plurality of nested structural elements (4a; 4b) and comprise at least one ARE outer tube (4a) and one ARE inner tube (4b) extending in the ARE outer tube (4a) and parallel to the ARE outer tube longitudinal axis, wherein the ARE outer tube (4a) has an oval, preferably elliptical, outer cross-sectional shape with the axis length ratio A_{L}/A_{K} in the range between 1.07 and 1.27, and the ARE inner tube (4b) has an oval, preferably elliptical, outer cross-sectional shape with the axis length ratio A_{L}/A_{K} in the range between 1.01 and 1.05.

3. The method according to any of the preceding claims, **characterized in that** the primary preform (3; 30) has an outer diameter in the range of 20 to 70 mm.

4. The method according to any of the preceding claims, **characterized in that** during elongation the primary preform (3; 30) is continuously fed to a heating zone at a feed rate, is softened zone by zone in the heating zone, and is withdrawn from the heating zone at a withdrawal rate, wherein the feed rate is set such that a throughput in the range of 3.3 g/min to 85 g/min is achieved.

5. The method according to any of the preceding claims, **characterized in that** the draw-down ratio during elongation is set to a value in the range of 1.05 to 10, preferably 1.05 to 5.

6. The method according to any of the preceding claims, **characterized in that** the fixing of the antiresonance element preforms (4) is carried out using a sealing or bonding compound (5) containing amorphous SiOz particles.

7. The method according to any of the preceding claims, **characterized in that**, during elongation of the primary preform (3; 30), open ends of the antiresonance element preforms (4) and/or individual structural elements (4a; 4b) of the antiresonance element preforms (4) and/or any annular gap between tubular elements are sealed by means of a sealing or bonding compound (5).

8. The method according to any of the preceding claims, **characterized in that** the cladding tube inner side is provided with a longitudinal structure extending in the direction of the cladding tube longitudinal axis, by machining in the region of the target positions.

9. The method according to any of the preceding claims, **characterized in that** the upper endface ends of the structural elements (4a; 4b) are positioned at the target position by means of a positioning template.

10. The method according to claim 9, **characterized in that** the positioning template is inserted in the region of one cladding tube end face, preferably in the region of both cladding tube end faces.

11. The method according to any of the preceding claims, **characterized in that**, during elongation of the primary preform (3; 30) according to method step (d) and/or during drawing of the hollow-core fiber (33) according to method step (e), multiple components of the preform made of quartz glass are heated and softened together, wherein the quartz glass of at least some of the preform components contains at least one dopant which lowers the viscosity of quartz glass.

12. A method according to claim 11, **characterised in that** additional cladding material is collapsed according to method step (d) and that the quartz glass of the cladding tube at a measurement temperature of 1250°C has a viscosity which is at least 0.5 dPa·s higher, preferably at least 0.6 dPa·s higher, than the quartz glass of the additionally applied sheath material (when the viscosity is given as a logarithmic value in dPa s).

13. The method according to any of the preceding claims, **characterized in that** the arranging of the antiresonance element preforms (4; 34) at target positions on the inner side of the cladding tube wall (2) and/or the drawing of the hollow-core fiber (33) according to method step (d) comprises a fixing measure and/or a sealing measure using a sealing or bonding compound (5) containing amorphous SiOz particles.

14. A method for producing a preform (32) for an antiresonant hollow-core fiber comprising a hollow core extending along a fiber longitudinal axis and an inner sheath region which surrounds the hollow core and comprises a plurality of antiresonance elements, comprising the method steps of:
(a) providing a cladding tube (1) which comprises a cladding tube inner bore and a cladding tube longitudinal axis along which a cladding tube wall (2) bounded by an inner side and an outer side extends,
(b) providing a number of tubular antiresonance element preforms (4),
(c) arranging the antiresonance element preforms (4; 34) at target positions on the inner side of the cladding tube wall (2) to form a primary preform (3; 30) which comprises a hollow core region and an inner sheath region,
(d) further processing the primary preform (3; 30) to form a secondary preform (32) for the hollow-core fiber, wherein the further processing comprises elongation and optionally a single or repeated performance of one or more of the following hot-forming processes:
(i) collapse,
(ii) collapse and simultaneous elongation,
(iii) collapse of additional sheath material,
(iv) collapse of additional sheath material and subsequent elongation,
(v) collapse of additional sheath material and simultaneous elongation,
wherein, after the elongation according to method step (d), at least a portion of the former tubular antiresonance element preforms (4; 34) of the primary preform (3; 30) has an oval outer cross-sectional shape, with a longest cross-sectional axis A_{L} and a shortest cross-sectional axis A_{K}, wherein the axis length ratio A_{L}/A_{K} is in the range between 1.01 and 1.27, and wherein the shortest cross-sectional axis A_{K} runs in the radial direction when viewed from the cladding tube longitudinal axis, **characterized in that** during elongation the primary preform (3; 30) is continuously fed to a heating zone at a feed rate, is softened zone by zone in the heating zone, and is withdrawn from the heating zone at a withdrawal rate, wherein the feed rate is set such that a throughput of at least 0.8 g/min and an average dwell time in the heating zone in the range of 5 to 25 min is achieved, and wherein a temperature-controlled heating zone is used, the target temperature of which is maintained to an accuracy of +/- 0.1°C.

## Revendications

1. Procédé pour la fabrication d'une fibre à coeur creux (33) antirésonante qui présente un coeur creux s'étendant le long d'un axe longitudinal de fibre et une région enveloppante interne entourant le coeur creux, laquelle comprend plusieurs éléments antirésonance, comportant les étapes de procédé consistant à :
(a) fournir un tuyau de gaine (1) qui présente un trou interne de tuyau de gaine et un axe longitudinal de tuyau de gaine le long duquel s'étend une paroi de tuyau de gaine (2) délimitée par une face interne et une face externe,
(b) fournir un certain nombre de préformes d'éléments antirésonance (4 ; 34) tubulaires,
(c) agencer les préformes d'éléments antirésonance (4 ; 34) en des positions de consigne de la face interne de la paroi de tuyau de gaine (2) pour former une préforme primaire (3 ; 30), laquelle présente une région de coeur creuse et une région enveloppante interne,
(d) transformer ultérieurement la préforme primaire (3 ; 30) en une préforme secondaire (32), à partir de laquelle la fibre à coeur creux (33) est étirée, dans lequel la transformation ultérieure comprend un allongement et éventuellement une réalisation unique ou répétée d'un ou de plusieurs des processus de thermoformage suivants :
(i) écrasement,
(ii) écrasement et allongement simultané,
(iii) écrasement de matériau enveloppant supplémentaire,
(iv) écrasement de matériau enveloppant supplémentaire et allongement consécutif,
(v) écrasement de matériau enveloppant supplémentaire et allongement simultané, et
(e) étirer la préforme secondaire (32) en la fibre à coeur creux (33), dans lequel, après l'allongement conformément à l'étape de procédé (d), au moins une partie des préformes d'éléments antirésonance (4 ; 34) tubulaires antérieures de la préforme primaire (3 ; 30) présente une forme de section transversale externe ovale, avec un axe de section transversale le plus long A_{L} et un axe de section transversale le plus court A_{K}, dans lequel le rapport de longueur d'axe A_{L}/A_{K} se situe dans la plage comprise entre 1,01 et 1,27, et dans lequel l'axe de section transversale le plus court A_{K} s'étend dans la direction radiale, vu à partir de l'axe longitudinal de tuyau de gaine, **caractérisé en ce que**, lors de l'allongement, la préforme primaire (3 ; 30) est amenée en continu à une zone de chauffage à une vitesse d'amenée, ramollie dans certaines zones dans la zone de chauffage, et retirée de la zone de chauffage à une vitesse de retrait, dans lequel la vitesse d'amenée est réglée de telle sorte qu'il en résulte un débit d'au moins 0,8 g/min et une durée moyenne de séjour dans la zone de chauffage dans la plage allant de 5 à 25 minutes, et dans lequel une zone de chauffage à température régulée est utilisée, dont la température de consigne est maintenue avec une précision de +/- 0,1 °C.

2. Procédé selon la revendication 1, **caractérisé en ce qu'**au moins une partie des préformes d'éléments antirésonance (4 ; 34) tubulaires se compose de plusieurs éléments structurels (4a ; 4b) imbriqués les uns dans les autres et comprend au moins un tube externe ARE (4a) et un tube interne ARE (4b) s'étendant dans le tube externe ARE (4a) et parallèlement à l'axe longitudinal de tube externe ARE, dans lequel le tube externe ARE (4a) a une forme de section transversale externe ovale, de préférence elliptique, avec le rapport de longueur d'axe A_{L}/A_{K} dans la plage comprise entre 1,07 et 1,27, et le tube interne ARE (4b) a une forme de section transversale externe ovale, de préférence elliptique, avec le rapport de longueur d'axe A_{L}/A_{K} dans la plage comprise entre 1,01 et 1,05.

3. Procédé selon l'une des revendications précédentes, **caractérisé en ce que** la préforme primaire (3 ; 30) présente un diamètre externe dans la plage allant de 20 à 70 mm.

4. Procédé selon l'une des revendications précédentes, **caractérisé en ce que**, lors de l'allongement, la préforme primaire (3 ; 30) est amenée en continu à une zone de chauffage à une vitesse d'amenée, ramollie dans certaines zones dans la zone de chauffage, et retirée de la zone de chauffage à une vitesse de retrait, dans lequel la vitesse d'amenée est réglée de telle sorte qu'il en résulte un débit dans la plage allant de 3,3 g/min à 85 g/min.

5. Procédé selon l'une des revendications précédentes, **caractérisé en ce que** le rapport d'étirage est réglé lors de l'allongement à une valeur dans la plage allant de 1,05 à 10, de préférence de 1,05 à 5.

6. Procédé selon l'une des revendications précédentes, **caractérisé en ce que** la fixation des préformes d'éléments antirésonance (4) est effectuée en utilisant une matière de scellement ou de liaison (5) contenant des particules amorphes de SiOz.

7. Procédé selon l'une des revendications précédentes, **caractérisé en ce que**, lors de l'allongement de la préforme primaire (3 ; 30), des extrémités ouvertes des préformes d'éléments antirésonance (4) et/ou d'éléments structurels (4a ; 4b) individuels des préformes d'éléments antirésonance (4) et/ou un éventuel espace annulaire entre des éléments tubulaires sont fermés à l'aide d'une matière de scellement ou de liaison (5).

8. Procédé selon l'une des revendications précédentes, **caractérisé en ce que** la face interne de tuyau de gaine est pourvue, par usinage avec enlèvement de copeaux, dans la zone des positions de consigne, d'une structure longitudinale s'étendant dans la direction de l'axe longitudinal de tuyau de gaine.

9. Procédé selon l'une des revendications précédentes, **caractérisé en ce que** les extrémités frontales supérieures des éléments structurels (4a ; 4b) sont positionnées à l'aide d'un gabarit de positionnement dans la position de consigne.

10. Procédé selon la revendication 9, **caractérisé en ce que** le gabarit de positionnement est utilisé dans la zone d'une face frontale de tuyau de gaine, de préférence dans la zone des deux faces frontales de tuyau de gaine.

11. Procédé selon l'une des revendications précédentes, **caractérisé en ce que**, lors de l'allongement de la préforme primaire (3 ; 30) conformément à l'étape de procédé (d) et/ou lors de l'étirage de la fibre à coeur creux (33) conformément à l'étape de procédé (e), plusieurs constituants de la préforme en verre de quartz sont chauffés et ramollis ensemble, dans lequel le verre de quartz d'au moins quelques-uns des constituants de préforme contient au moins un dopant qui abaisse la viscosité du verre de quartz.

12. Procédé selon la revendication 11, **caractérisé en ce que**, conformément à l'étape de procédé (d), du matériau enveloppant supplémentaire est écrasé, et **en ce que** le verre de quartz du tuyau de gaine présente, à une température de mesure de 1 250 °C, une viscosité supérieure d'au moins 0,5 dPa·s, de préférence une viscosité supérieure d'au moins 0,6 dPa·s à celle du verre de quartz du matériau enveloppant appliqué en plus (avec une indication de la viscosité en tant que valeur logarithmique en dPa·s).

13. Procédé selon l'une des revendications précédentes, **caractérisé en ce que** l'agencement des préformes d'éléments antirésonance (4 ; 34) en des positions de consigne de la face interne de la paroi de tuyau de gaine (2) et/ou l'étirage de la fibre à coeur creux (33) conformément à l'étape de procédé (d) comprennent une mesure de fixation et/ou une mesure de scellement en utilisant une matière de scellement ou de liaison (5) contenant des particules amorphes de SiOz.

14. Procédé pour la fabrication d'une préforme (32) pour une fibre à coeur creux antirésonante qui présente un coeur creux s'étendant le long d'un axe longitudinal de fibre et une région enveloppante interne entourant le coeur creux, laquelle comprend plusieurs éléments antirésonance, comportant les étapes de procédé consistant à :
(a) fournir un tuyau de gaine (1) qui présente un trou interne de tuyau de gaine et un axe longitudinal de tuyau de gaine le long duquel s'étend une paroi de tuyau de gaine (2) délimitée par une face interne et une face externe,
(b) fournir un certain nombre de préformes d'éléments antirésonance (4) tubulaires,
(c) agencer les préformes d'éléments antirésonance (4 ; 34) en des positions de consigne de la face interne de la paroi de tuyau de gaine (2) pour former une préforme primaire (3 ; 30), laquelle présente une région de coeur creuse et une région enveloppante interne,
(d) transformer ultérieurement la préforme primaire (3 ; 30) en une préforme secondaire (32) pour la fibre à coeur creux, dans lequel la transformation ultérieure comprend un allongement et éventuellement une réalisation unique ou répétée d'un ou de plusieurs des procédés de thermoformage suivants :
(i) écrasement,
(ii) écrasement et allongement simultané,
(iii) écrasement de matériau enveloppant supplémentaire,
(iv) écrasement de matériau enveloppant supplémentaire et allongement consécutif,
(v) écrasement de matériau enveloppant supplémentaire et allongement simultané,
dans lequel, après l'allongement conformément à l'étape de procédé (d), au moins une partie des préformes d'éléments antirésonance (4 ; 34) tubulaires antérieures de la préforme primaire (3 ; 30) présente une forme de section transversale externe ovale, avec un axe de section transversale le plus long A_{L} et un axe de section transversale le plus court A_{K}, dans lequel le rapport de longueur d'axe A_{L}/A_{K} se situe dans la plage comprise entre 1,01 et 1,27, et dans lequel l'axe de section transversale le plus court A_{K} s'étend dans la direction radiale, vu à partir de l'axe longitudinal de tuyau de gaine, **caractérisé en ce que**, lors de l'allongement, la préforme primaire (3 ; 30) est amenée en continu à une zone de chauffage à une vitesse d'amenée, ramollie dans certaines zones dans la zone de chauffage, et retirée de la zone de chauffage à une vitesse de retrait, dans lequel la vitesse d'amenée est réglée de telle sorte qu'il en résulte un débit d'au moins 0,8 g/min et une durée moyenne de séjour dans la zone de chauffage dans la plage allant de 5 à 25 minutes, et dans lequel une zone de chauffage à température régulée est utilisée, dont la température de consigne est maintenue avec une précision de +/- 0,1 °C.
